# EUROPEAN PATENT APPLICATION

(11) **EP 4 852 123 A1**
(43) Date of publication of application: **09.12.2026**
(21) Application number: 25748230.7
(22) Date of filing: 20.01.2025
(51) Int. Cl.: H01M 10/0567, H01M 10/052, H01M 10/0569

(54) **NONAQUEOUS ELECTROLYTE SOLUTION AND NONAQUEOUS ELECTROLYTE SECONDARY BATTERY**

(30) Priority: 31.01.2024 JP 2024013346
(71) Applicant: Panasonic Intellectual Property Management Co., Ltd., Kadoma-shi, Osaka 571-0057 (JP)
(72) Inventor: ASANO, Kazuko, Kadoma-shi, Osaka 571-0057 (JP); SAGARA, Akihiko, Kadoma-shi, Osaka 571-0057 (JP); SATO, Kento, Kadoma-shi, Osaka 571-0057 (JP); FUJINO, Yasuhiro, Kadoma-shi, Osaka 571-0057 (JP)
(74) Representative: Novagraaf International SA
(86) International application number: PCT/JP2025/001642
(87) International publication number: WO 2025/164421

(57) **Abstract**

A nonaqueous electrolyte solution according to the present disclosure includes: a nonaqueous solvent; an electrolyte dissolved in the nonaqueous solvent; and a phosphorus-containing compound, wherein the phosphorus-containing compound includes at least one selected from the group consisting of magnesium, strontium, and barium. The phosphorus-containing compound may include at least one selected from the group consisting of Sr₃(PO₄)₂, Ba₃(PO₄)₂, and Ba₂P₂O₇.

## Description

### TECHNICAL FIELD

The present disclosure relates to a nonaqueous electrolyte solution and a nonaqueous electrolyte secondary battery.

### BACKGROUND ART

As is known to those skilled in the art, electrolyte solutions of conventional batteries contain various components. For example, Patent Literature 1 discloses that a nonaqueous electrolyte secondary battery including vinylene carbonate as a nonaqueous solvent has favorable cycle characteristics.

### CITATION LIST

### Patent Literature

Patent Literature 1: JP 2005-268230 A

### SUMMARY OF INVENTION

### Technical Problem

The present disclosure provides a nonaqueous electrolyte solution suitable for enhancing the output characteristics of a battery.

### Solution to Problem

The present disclosure provides a nonaqueous electrolyte solution including:
a nonaqueous solvent;
an electrolyte dissolved in the nonaqueous solvent; and
a phosphorus-containing compound, wherein
the phosphorus-containing compound includes at least one selected from the group consisting of magnesium, strontium, and barium.

### Advantageous Effects of Invention

According to the technique of the present disclosure, the output characteristics of a battery can be enhanced.

### BRIEF DESCRIPTION OF DRAWINGS

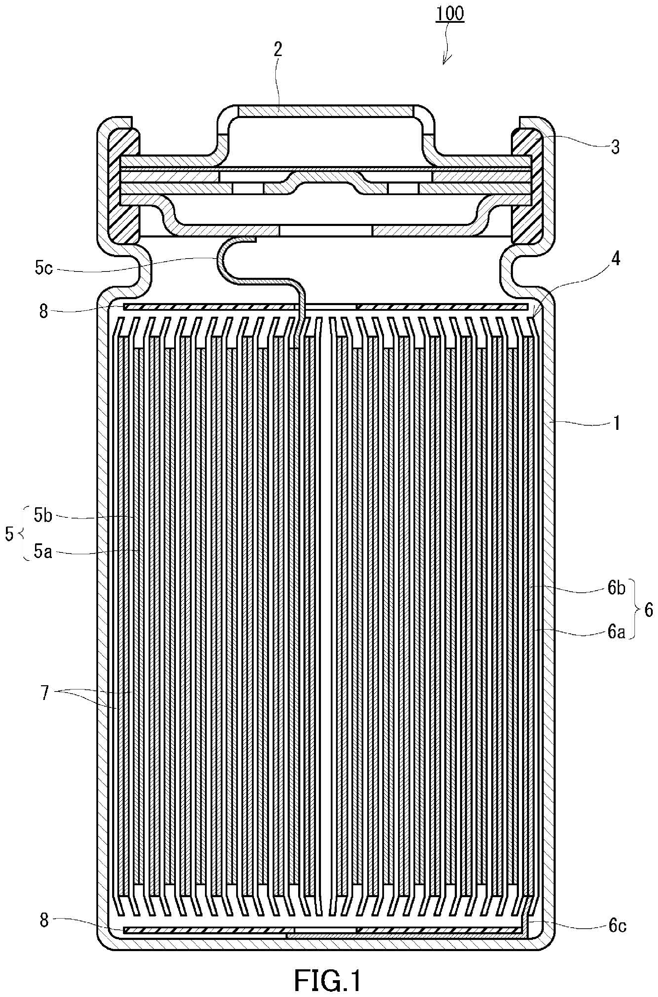

FIG. 1 is a cross-sectional view schematically showing an example of a nonaqueous electrolyte secondary battery according to Embodiment 2.

### DESCRIPTION OF EMBODIMENTS

Embodiments of the present disclosure are described below with reference to the drawings. The present disclosure is not limited to the embodiments described below.

### (Embodiment 1)

A nonaqueous electrolyte solution according to Embodiment 1 includes a nonaqueous solvent, an electrolyte dissolved in the nonaqueous solvent, and a phosphorus-containing compound. The phosphorus-containing compound includes at least one selected from the group consisting of magnesium, strontium, and barium. By using the nonaqueous electrolyte solution according to Embodiment 1 in a battery, the output characteristics of the battery can be enhanced.

Although the mechanism by which the nonaqueous electrolyte solution according to Embodiment 1 exhibits the above effect is not necessarily clear, the following mechanism is presumed. Ions such as lithium ions are usually solvated in a nonaqueous electrolyte solution. Inclusion of the phosphorus-containing compound in the nonaqueous electrolyte solution changes the solvation environment, thereby promoting formation of an ionic conduction path between the active material and the nonaqueous electrolyte solution. Consequently, the output characteristics of a battery using the nonaqueous electrolyte solution according to Embodiment 1 are enhanced as compared with those of a battery using a nonaqueous electrolyte solution that does not include any phosphorus-containing compound. In particular, magnesium, strontium, and barium, which are classified as alkaline earth metals, tend to have an oxidation state of +2 in phosphorus-containing compounds. Accordingly, when magnesium, strontium, and barium are included in the phosphorus-containing compound, the Coulomb force between these elements and phosphorus is strengthened, stabilizing the phosphorus-containing compound.

It is also considered that when a battery using the nonaqueous electrolyte solution according to Embodiment 1 is operated, the phosphorus-containing compound included in the nonaqueous electrolyte solution forms a coating film on the surface of the positive electrode. Accordingly, oxidative decomposition of the nonaqueous solvent at the interface between the nonaqueous electrolyte solution and the positive electrode can be suppressed. Furthermore, even when the coating film becomes damaged over time and through repeated charging and discharging, the phosphorus-containing compound included in the nonaqueous electrolyte solution is capable of repairing the coating film. Accordingly, a battery using the nonaqueous electrolyte solution according to Embodiment 1 can achieve an effect of suppressing the oxidative decomposition of the nonaqueous solvent for a long period of time and can enhance cycle characteristics, as compared with, for example, a battery assembled using a positive electrode having a coating film directly formed thereon.

There is also a possibility that, when a battery using the nonaqueous electrolyte solution according to Embodiment 1 is operated, HF that may be generated in the nonaqueous electrolyte solution and the phosphorus-containing compound preferentially react with each other, thereby protecting the positive electrode.

The nonaqueous electrolyte solution according to Embodiment 1 is, at 25°C, for example, in a liquid state. The term "liquid state" includes sols. The nonaqueous electrolyte solution according to Embodiment 1 can have fluidity at 25°C.

In the present disclosure, the term "having fluidity at 25°C" means having a viscosity of 20,000 mPa·s or less at 25°C.

The viscosity of the nonaqueous electrolyte solution according to Embodiment 1 at 25°C may be 5,000 mPa·s or less, 3,000 mPa·s or less, or 1,000 mPa·s or less.

The phosphorus-containing compound may be insoluble in the nonaqueous solvent. The nonaqueous electrolyte solution according to Embodiment 1 may include particles of the phosphorus-containing compound insoluble in the nonaqueous solvent. The nonaqueous electrolyte solution according to Embodiment 1 may be a nonaqueous colloidal solution in which the particles of the phosphorus-containing compound are dispersed.

In the present disclosure, the term "particles of a phosphorus-containing compound insoluble in a nonaqueous solvent" means particles of a phosphorus-containing compound for which 100 mL or more of a nonaqueous solvent is required to dissolve 1 g at 25°C. That is, the solubility of the particles of the phosphorus-containing compound in 100 mL of the nonaqueous solvent is 1 g or less. Here, the term "dissolve" means that, when the particles of the phosphorus-containing compound are added, for dissolution, to the nonaqueous solvent in a container, both of the following are satisfied: the resulting solution exhibits no change in transmittance relative to the solvent, that is, the solution exhibits no turbidity; and no sediment is observed on the bottom surface of the container after standing for 24 hours.

The particles of the phosphorus-containing compound may be particles of a phosphorus-containing compound having a solubility of 0.1 g or less in 100 mL.

The phosphorus-containing compound can be an inorganic phosphorus compound that includes at least one selected from the group consisting of magnesium, strontium, and barium. The phosphorus-containing compound may include, as an alkaline earth metal element, only one selected from the group consisting of magnesium, strontium, and barium. Such a phosphorus-containing compound can be synthesized relatively easily or can be obtained as a commercially available reagent.

The phosphorus-containing compound may be a compound that does not include lithium. The phosphorus-containing compound can be a material different from an electrolyte usually contained in the nonaqueous electrolyte solution.

The phosphorus-containing compound may be a compound that does not include water of crystallization. When the phosphorus-containing compound does not include water of crystallization, deterioration in battery performance due to moisture can be avoided.

The phosphorus-containing compound may include MₓP₂O_{y} (1 ≤ x ≤ 3, 5 ≤ y ≤ 10). M includes at least one selected from the group consisting of magnesium, strontium, and barium. According to such a compound, an effect of enhancing the output characteristics of a battery can be sufficiently achieved. M may be magnesium, strontium, or barium.

The phosphorus-containing compound may include at least one selected from the group consisting of a phosphate and a pyrophosphate. A phosphate is a salt of an alkaline earth metal ion and a phosphate ion (PO₄²⁻). A pyrophosphate is a salt of an alkaline earth metal ion and a pyrophosphate ion (P₂O₇⁴⁻).

The phosphorus-containing compound may include at least one selected from the group consisting of Sr₃(PO₄)₂, Ba₃(PO₄)₂, and Ba₂P₂O₇. According to such a compound, an effect of enhancing the output characteristics of a battery can be sufficiently achieved.

The phosphorus-containing compound may include a transition metal element in addition to the alkaline earth metal element. The transition metal element may include at least one selected from the group consisting of Ti, V, Cr, Mn, Fe, Co, Ni, Cu, Zn, Zr, Nb, Ag, and Cd. Examples of phosphorus-containing compounds including an alkaline earth metal element and a transition metal element include Mg_{1.8}Mn_{0.2}P₂O₇, (Mg_{0.54}Co_{0.46})₂(P₂O₇), (Ni_{0.73}Mg_{0.27})₃(PO₄)₂, (Ni_{0.60}Mg_{0.40})₃(PO₄)₂, (Ni_{0.45}Mg_{0.55})₃(PO₄)₂, Mg_{0.5}Zr₂(PO₄)₃, Co₂Mg(PO₄)₂, Co₃Mg₃(PO₄)₄, Mg₂Mn(PO₄)₂, and Mg_{0.5}Zr₂(PO₄)₃. At least one selected from these can be used as the phosphorus-containing compound. A phosphorus-containing compound that does not include any transition metal element and a phosphorus-containing compound that includes a transition metal element may be used in combination.

The content of the phosphorus-containing compound in the nonaqueous electrolyte solution according to Embodiment 1 may be 0.1 vol% or more and 50 vol% or less. The content of the phosphorus-containing compound may be 0.1 vol% or more and 10 vol% or less, 0.1 vol% or more and 8 vol% or less, 0.5 vol% or more and 6 vol% or less, 1 vol% or more and 5 vol% or less, or 1 vol% or more and 4 vol% or less. According to the above configuration, favorable fluidity of the nonaqueous electrolyte solution can be achieved. When the phosphorus-containing compound is in particulate form, the above configuration can achieve favorable dispersibility of the particles of the phosphorus-containing compound.

When the nonaqueous electrolyte solution according to Embodiment 1 includes the particles of the phosphorus-containing compound, the content of the particles of the phosphorus-containing compound can be determined, for example, by the following method. The volume of the nonaqueous electrolyte solution is measured, and then the nonaqueous electrolyte solution is filtered through a filter to separate the particles. The separated particles are washed with a solvent such as dimethyl carbonate and dried by evaporating the washing solvent, after which the mass of the particles is measured. The volume of the particles is calculated from the mass of the particles and the specific gravity determined from the components of the particles. The components of the particles can be determined by various analytical methods, such as inductively coupled plasma spectrometry (ICP), X-ray diffractometry (XRD), infrared absorption spectroscopy (IR), and nuclear magnetic resonance spectroscopy (NMR). Thus, the content of the particles of the phosphorus-containing compound in the nonaqueous electrolyte solution can be calculated. Additionally, the volume of the nonaqueous electrolyte solution can also be calculated from the composition and mass thereof. The composition of the nonaqueous electrolyte solution can be measured by liquid chromatography, gas chromatography, or the like.

The particles of the phosphorus-containing compound may be nanoparticles.

The average particle diameter of the particles of the phosphorus-containing compound may be 1 nm or more and 500 nm or less. According to the above configuration, the dispersibility of the particles of the phosphorus-containing compound in the nonaqueous electrolyte solution is enhanced, making it possible to enhance the industrial productivity of the nonaqueous electrolyte solution. The average particle diameter of the particles of the phosphorus-containing compound may be 5 nm or more and 400 nm or less, or 10 nm or more and 300 nm or less. When the average particle diameter of the particles of the phosphorus-containing compound is 500 nm or less, in a battery using the nonaqueous electrolyte solution of the present disclosure, during permeation of the nonaqueous electrolyte solution into the positive electrode active material layer, the particles of the phosphorus-containing compound can penetrate between the positive electrode active material particles disposed within the positive electrode active material layer. Accordingly, a coating film of the phosphorus-containing compound is also formed on the surface of the positive electrode active material disposed within the positive electrode active material layer, and therefore, the oxidative decomposition of the solvent within the positive electrode active material layer can be suppressed.

The average particle diameter of the particles of the phosphorus-containing compound may be equal to or smaller than the pore diameter of the separator in a battery using the nonaqueous electrolyte solution. According to the above configuration, the particles of the phosphorus-containing compound do not clog the pores of the separator, and accordingly, the distribution of the electrolyte solution within the electrode group is not hindered even during charging and discharging.

In the present disclosure, the average particle diameter refers to the median diameter (d50). The median diameter is the particle diameter at a cumulative volume equal to 50% in the volume-based particle size distribution. The volume-based particle size distribution can be determined by laser diffraction scattering using a commercially available laser diffractometer.

The electrolyte includes, for example, a lithium salt. Examples of the lithium salt include lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bis(perfluoroethylsulfonyl)imide (LiN(SO₂C₂F₅)₂), LiAsF₆, LiCF₃SO₃, and lithium difluoro(oxalato)borate. As the lithium salt, at least one selected from the substances described above can be used. The lithium salt may contain fluorine (F). The lithium salt may be LiPF₆.

The concentration of the lithium salt in the nonaqueous electrolyte solution may be, for example, 0.5 mol/L or more and 2 mol/L or less. By controlling the concentration of the lithium salt within the above range, an electrolyte solution having excellent ionic conductivity and moderate viscosity can be obtained. However, the concentration of the lithium salt is not limited to the above range.

The nonaqueous solvent is not particularly limited, and for example, a cyclic carbonate, a chain carbonate, or a cyclic carboxylic acid ester is used.

Examples of cyclic carbonates include propylene carbonate (PC) and ethylene carbonate (EC).

Examples of chain carbonates include diethyl carbonate (DEC), ethyl methyl carbonate (EMC), and dimethyl carbonate (DMC).

Examples of cyclic carboxylic acid esters include γ-butyrolactone (GBL) and γ-valerolactone (GVL).

One nonaqueous solvent may be used alone, or two or more nonaqueous solvents may be used in combination. The nonaqueous solvent may include ethylene carbonate. In this case, the solubility of the electrolyte, such as a lithium salt, in the nonaqueous solvent can be enhanced.

The nonaqueous electrolyte solution according to Embodiment 1 may further include other substances in addition to those described above. For example, the nonaqueous electrolyte solution according to Embodiment 1 may further include an additive to enhance the dispersibility of the particles of the phosphorus-containing compound. The additive is, for example, a fluorine-containing solvent. That is, the nonaqueous electrolyte solution according to Embodiment 1 may further include a fluorine-containing solvent. According to the above configuration, agglomeration of the particles of the phosphorus-containing compound over time and the resulting settling of the particles can be reduced.

Examples of the fluorine-containing solvent include a fluorinated cyclic ester and a fluorinated ether. The fluorinated cyclic ester may include fluoroethylene carbonate. The fluorinated ether may include 1,1,2,2-tetrafluoroethyl-2,2,2-trifluoroethyl ether.

The nonaqueous electrolyte solution according to Embodiment 1 can be manufactured, for example, by the following method.

A lithium salt is dissolved in a nonaqueous solvent. The solution thus obtained, the above-described phosphorus-containing compound, and ZrO₂ balls as a mixing medium are mixed using a ball mill. The mixing medium is removed from the resulting liquid mixture. Thus, the nonaqueous electrolyte solution according to Embodiment 1 is obtained.

The method for manufacturing the nonaqueous electrolyte solution is not limited to the one described above. For example, an ultrasonic homogenizer may be used to disperse the particles of the phosphorus-containing compound in a nonaqueous solvent having a lithium salt dissolved therein.

### (Embodiment 2)

A nonaqueous electrolyte secondary battery according to Embodiment 2 includes a positive electrode, a negative electrode, and the nonaqueous electrolyte solution according to Embodiment 1. By using the nonaqueous electrolyte solution according to Embodiment 1, the cycle characteristics of the secondary battery can be enhanced.

FIG. 1 is a cross-sectional view schematically showing an example of the nonaqueous electrolyte secondary battery according to Embodiment 2. A secondary battery 100 includes a container 1, an electrode group 4, and an electrolyte solution that is not shown. The electrolyte solution is the nonaqueous electrolyte solution according to Embodiment 1. The electrode group 4 has a wound structure. The electrode group 4 is housed in the container 1. The electrode group 4 includes a positive electrode 5, a negative electrode 6, and a pair of separators 7. The electrode group 4 is impregnated with the electrolyte solution. The opening of the container 1 is sealed with a sealing plate 2. The positive electrode 5 includes a positive electrode current collector 5a and a positive electrode active material layer 5b. To the positive electrode 5, one end of a positive electrode lead 5c is connected. The other end of the positive electrode lead 5c is connected to the back surface of the sealing plate 2. An insulating gasket 3 is disposed to surround the sealing plate 2. The negative electrode 6 includes a negative electrode current collector 6a and a negative electrode active material layer 6b. To the negative electrode 6, one end of a negative electrode lead 6c is connected. The other end of the negative electrode lead 6c is connected to the bottom surface of the container 1. An insulating ring 8 is disposed on each of the upper and lower surfaces of the electrode group 4.

The components of the secondary battery 100 are specifically described below.

As the positive electrode current collector 5a, a sheet or film formed of a metal material such as aluminum, stainless steel, titanium, or an alloy of any of these can be used. Aluminum and alloys thereof are inexpensive and can be easily formed into thin films, and are accordingly suitable as materials of the positive electrode current collector 5a. The sheet or film may be porous or non-porous. As the sheet or film, a metal foil, a metal mesh, or the like is used. A carbon material, such as carbon, may be applied as a conductive auxiliary material to the surface of the positive electrode current collector 5a.

The positive electrode active material layer 5b includes a positive electrode active material. The positive electrode active material can be a material capable of occluding and releasing lithium ions. The positive electrode active material can be a lithium-containing transition metal oxide, a lithium-containing transition metal phosphate, a transition metal fluoride, a polyanion material, a fluorinated polyanion material, a transition metal sulfide, a transition metal oxysulfide, a transition metal oxynitride, or the like. In particular, when a lithium-containing transition metal oxide or a lithium-containing transition metal phosphate is used as the positive electrode active material, the battery manufacturing cost can be reduced and the average discharge voltage can be increased. Examples of lithium-containing transition metal oxides include lithium cobalt oxides, lithium nickel cobalt aluminum oxides, lithium nickel cobalt manganese oxides, and lithium nickel manganese oxides. Examples of lithium-containing transition metal phosphates include lithium iron phosphates, lithium vanadium phosphates, lithium cobalt phosphates, and lithium nickel phosphates.

The positive electrode active material may include a lithium nickel oxide having a layered rock salt-type crystal structure. The proportion of Ni among the metal elements contained in the lithium nickel oxide except for Li may be 50 at% or more. The lithium nickel oxide may include an additional transition metal. The lithium nickel oxide is useful for achieving a high operating voltage.

The lithium nickel oxide may be represented by the following composition formula (I). The element M1 is at least one selected from the group consisting of V, Co, and Mn. The element M2 is at least one selected from the group consisting of Mg, Al, Ca, Ti, Cu, Zn, and Nb. The composition formula (I) satisfies 0.9 ≤ α ≤ 1.10, -0.05 ≤ β ≤ 0.05, 0.5 ≤ x1 < 1, 0 ≤ x2 ≤ 0.5, and 0 ≤ 1 - x1 - x2 ≤ 0.5.

Li_{α}Niₓ₁M1ₓ₂M2₍₁₋ₓ₁₋ₓ₂₎O_{2+β} (I)

The positive electrode active material layer 5b may include other materials such as a conductive additive and a binder.

The conductive additive is used to reduce the resistance of the positive electrode 5. Examples of the conductive additive include a carbon material and a conductive polymer compound. Examples of carbon materials include carbon black, graphite, acetylene black, carbon nanotubes, carbon nanofibers, graphene, fullerenes, and graphite oxide. Examples of conductive polymer compounds include polyaniline, polypyrrole, and polythiophene.

The binder is used to enhance the binding properties of the materials constituting the positive electrode 5. The binder can be a polymer material, such as polyvinylidene fluoride, a vinylidene fluoride-hexafluoropropylene copolymer, a vinylidene fluoride-tetrafluoroethylene copolymer, polytetrafluoroethylene, carboxymethylcellulose, polyacrylic acid, styrene-butadiene copolymer rubber, polypropylene, polyethylene, or polyimide.

As the negative electrode current collector 6a, a sheet or film formed of a metal material such as stainless steel, nickel, copper, or an alloy of any of these can be used. The sheet or film may be porous or non-porous. As the sheet or film, a metal foil, a metal mesh, or the like is used. A carbon material, such as carbon, may be applied as a conductive auxiliary material to the surface of the negative electrode current collector 6a.

The negative electrode active material layer 6b includes a negative electrode active material. The negative electrode active material can be a material capable of occluding and releasing lithium ions. The negative electrode active material includes, for example, at least one selected from the group consisting of a carbon material and a material capable of forming an alloy with lithium. Examples of the carbon material include graphite. Examples of the material capable of forming an alloy with lithium include silicon, a silicon-containing oxide, tin, a zinc alloy, bismuth, and germanium. One selected from these negative electrode active materials may be used, or two or more selected from these negative electrode active materials may be used in combination.

The negative electrode active material layer 6b may include, as the negative electrode active material, at least one selected from the group consisting of graphite and silicon. The negative electrode active material layer 6b may include only graphite as the negative electrode active material. Graphite is recommended because graphite is less susceptible to deterioration even after repeated charging and discharging at a high depth of discharge. A carbon material other than graphite may be used as the negative electrode active material. Silicon exhibits higher capacity than graphite and is accordingly advantageous for increasing the capacity of the secondary battery 100.

The negative electrode active material layer 6b may include other materials such as a conductive additive and a binder. The materials that can be used as the conductive additive and the binder in the positive electrode active material layer 5b can also be used in the negative electrode active material layer 6b.

The electrolyte solution is the nonaqueous electrolyte solution according to Embodiment 1. The positive electrode 5, the negative electrode 6, and the separator 7 are impregnated with the electrolyte solution. The electrolyte solution may fill the interior space of the container 1. The action of the electrolyte solution allows lithium ions to migrate between the positive electrode 5 and the negative electrode 6.

The average particle diameter of the particles of the phosphorus-containing compound contained in the electrolyte solution may be equal to or smaller than the pore diameter of the separator 7.

The separator 7 has lithium-ion conductivity. The material of the separator 7 may be any material through which lithium ions are allowed to pass. The material of the separator 7 can be at least one selected from the group consisting of a gel electrolyte, an ion exchange resin membrane, a semipermeable membrane, and a porous membrane. When the separator 7 is formed of any of these materials, the safety of the secondary battery 100 can be sufficiently ensured. Examples of the gel electrolyte include gel electrolytes containing a fluororesin, such as PVdF. Examples of the ion exchange resin membrane include cation exchange membranes and anion exchange membranes. Examples of the porous membrane include porous membranes made of a polyolefin resin and porous membranes containing glass paper obtained by incorporating glass fibers into a nonwoven fabric. By using the nonaqueous electrolyte solution according to Embodiment 1 in the secondary battery 100, the oxidation of the separator 7 is suppressed, and thus a decrease in the strength of the separator 7 can be reduced.

The container 1 is, for example, a container made of a metal such as aluminum or stainless steel. The container 1 may have a cylindrical shape or a prismatic shape.

The electrode group 4 may be wound in a cylindrical shape or an elliptical shape.

The secondary battery 100 is not limited to any particular shape. In the present disclosure, as an example of the structure of the nonaqueous electrolyte secondary battery according to Embodiment 2, the configuration example shown in FIG. 1 is described. In this configuration example, a secondary battery includes an electrode group, in which a positive electrode and a negative electrode are wound with a separator interposed therebetween, and an electrolyte solution, both of which are housed in an outer casing. However, the secondary battery according to the present disclosure is not limited to this configuration example. The secondary battery according to the present disclosure may be in any form, such as a cylindrical type, a prismatic type, a coin type, a button type, or a laminated type. Furthermore, as the electrode group in the secondary battery according to the present disclosure, the wound-type electrode group may be replaced with any other type of electrode group, such as a stacked-type electrode group in which a positive electrode and a negative electrode are stacked with a separator interposed therebetween.

The application of the nonaqueous electrolyte solution of the present disclosure is not limited to the secondary battery 100. The nonaqueous electrolyte solution of the present disclosure can be applied to various secondary batteries in addition to lithium secondary batteries, such as sodium secondary batteries and magnesium secondary batteries.

### (Other Embodiments)

### (Supplementary Description)

From the description of the above embodiments, the following techniques are disclosed.

### (Technique 1)

A nonaqueous electrolyte solution including:
a nonaqueous solvent;
an electrolyte dissolved in the nonaqueous solvent; and
a phosphorus-containing compound, wherein
the phosphorus-containing compound includes at least one selected from the group consisting of magnesium, strontium, and barium.

According to Technique 1, the output characteristics of a battery can be enhanced.

### (Technique 2)

The nonaqueous electrolyte solution according to Technique 1, wherein the phosphorus-containing compound includes MₓP₂O_{y} (1 ≤ x ≤ 3, 5 ≤ y ≤ 10), and M includes at least one selected from the group consisting of magnesium, strontium, and barium. According to such a compound, an effect of enhancing the output characteristics of a battery can be sufficiently achieved.

### (Technique 3)

The nonaqueous electrolyte solution according to Technique 1 or 2, wherein the phosphorus-containing compound includes at least one selected from the group consisting of Sr₃(PO₄)₂, Ba₃(PO₄)₂, and Ba₂P₂O₇. According to such a compound, an effect of enhancing the output characteristics of a battery can be sufficiently achieved.

### (Technique 4)

The nonaqueous electrolyte solution according to any one of Techniques 1 to 3, wherein a content of the phosphorus-containing compound in the nonaqueous electrolyte solution is 0.1 vol% or more and 50 vol% or less. According to the above configuration, favorable fluidity of the nonaqueous electrolyte solution can be achieved.

### (Technique 5)

The nonaqueous electrolyte solution according to any one of Techniques 1 to 4, wherein the phosphorus-containing compound is insoluble in the nonaqueous solvent, particles of the phosphorus-containing compound are included in the nonaqueous electrolyte solution, and an average particle diameter of the particles is 1 nm or more and 500 nm or less. According to the above configuration, the dispersibility of the particles of the phosphorus-containing compound in the nonaqueous electrolyte solution is enhanced, making it possible to enhance the industrial productivity of the nonaqueous electrolyte solution.

### (Technique 6)

The nonaqueous electrolyte solution according to any one of Techniques 1 to 5, further including a fluorine-containing solvent. According to the above configuration, agglomeration of the particles of the phosphorus-containing compound over time and the resulting settling of the particles can be reduced.

### (Technique 7)

The nonaqueous electrolyte solution according to Technique 6, wherein the fluorine-containing solvent includes a fluorinated cyclic ester.

### (Technique 8)

A nonaqueous electrolyte secondary battery including:
a positive electrode;
a negative electrode; and
the nonaqueous electrolyte solution according to any one of Techniques 1 to 7.

According to Technique 8, a nonaqueous electrolyte secondary battery having enhanced output characteristics can be provided.

### EXAMPLES

### (Example 1)

### (Preparation of Nonaqueous Electrolyte Solution)

Ethylene carbonate (EC), fluoroethylene carbonate (FEC), dimethyl carbonate (DMC), and ethyl methyl carbonate (EMC) were mixed in a volume ratio of EC:FEC:DMC:EMC = 10:10:75:5 to prepare a nonaqueous solvent. In the nonaqueous solvent thus obtained, LiPF₆ was dissolved to a concentration of 1.0 mol/L to obtain a solution. An amount of 15 mL of the solution obtained, 2.72 g of Sr₃(PO₄)₂ particles (average particle diameter: 200 nm) as the particles of the phosphorus-containing compound, and 70 g of ZrO₂ balls (average particle diameter: 0.5 mm) as a mixing medium were introduced into a ball mill and mixed at 300 rpm for 2 hours. The average particle diameter of the Sr₃(PO₄)₂ particles after mixing was 20 nm. The supernatant of the resulting liquid mixture was drawn off using a pipette to remove the ZrO₂ balls, and thus the nonaqueous electrolyte solution of Example 1 was obtained. In the nonaqueous electrolyte solution of Example 1, the Sr₃(PO₄)₂ particles were dispersed at 4 vol%. The nonaqueous electrolyte solution of Example 1 exhibited fluidity at 25°C.

### (Example 2)

The nonaqueous electrolyte solution of Example 2 was obtained in the same manner as in Example 1, except that 2.47 g of Ba₂P₂O₇ particles (average particle diameter: 200 nm) were introduced into a ball mill in place of the Sr₃(PO₄)₂ particles. The nonaqueous electrolyte solution of Example 2 exhibited fluidity at 25°C.

### (Example 3)

The nonaqueous electrolyte solution of Example 3 was obtained in the same manner as in Example 1, except that 3.15 g of Ba₃(PO₄)₂ particles (average particle diameter: 200 nm) were introduced into a ball mill in place of the Sr₃(PO₄)₂ particles. The nonaqueous electrolyte solution of Example 3 exhibited fluidity at 25°C.

### (Comparative Example 1)

EC, FEC, DMC, and EMC were mixed in a volume ratio of EC:FEC:DMC:EMC = 10:10:75:5 to prepare a nonaqueous solvent. In the nonaqueous solvent thus obtained, LiPF₆ was dissolved to a concentration of 1.0 mol/L, and thus the nonaqueous electrolyte solution of Comparative Example 1 was obtained. That is, the nonaqueous electrolyte solution of Comparative Example 1 was prepared in the same manner as in Example 1, except that the particles of the phosphorus-containing compound were not included.

### [Fabrication of Test Cells]

Test cells were fabricated using the respective nonaqueous electrolyte solutions of Examples 1 to 3 and Comparative Example 1 by the following procedure.

A positive electrode active material having the composition LiNi_{0.8}Co_{0.1}Mn_{0.1}O₂, acetylene black (AB), and polyvinylidene fluoride (PVDF) were stirred with the addition of N-methyl-2-pyrrolidone (NMP) to prepare a positive electrode slurry. The mass ratio of these materials in the positive electrode active material layer was positive electrode active material:AB:PVDF = 96:2:2.

The positive electrode slurry was applied to the surface of an aluminum foil (1.45 cm × 1.45 cm), and the coating film was dried and then rolled to form the positive electrode active material layer. Thus, the positive electrode was obtained.

Laminated half-cells were fabricated using the positive electrode, a Li metal foil (2 cm × 2 cm, thickness: 200 µm) as the counter electrode, a separator, and the respective nonaqueous electrolyte solutions of Examples 1 to 3 and Comparative Example 1. The separator used was a polyethylene separator (#2320, manufactured by Celgard, LLC).

Thus, the evaluation cells of Examples 1 to 3 and Comparative Example 1 were obtained.

### [Measurement of Charge Capacity and Discharge Capacity]

The evaluation cells of Examples 1 to 3 and Comparative Example 1 were charged and discharged according to the following procedure, and the charge capacity and discharge capacity at each cycle were measured. The measurements were performed at an ambient temperature of 25°C.

### (1st Cycle)

A constant-current charge was performed at a current value of 0.2C until the voltage reached 4.5 V, and a constant-voltage charge was performed at a voltage of 4.5 V until the current value reached 0.02C. Thereafter, a constant-current discharge was performed at a current value of 0.1C until the voltage reached 2.5 V. The results are shown in Table 1A.

### (2nd Cycle)

A constant-current charge was performed at a current value of 0.2C until the voltage reached 4.5 V, and a constant-voltage charge was performed at a voltage of 4.5 V until the current value reached 0.02C. Thereafter, a constant-current discharge was performed at a current value of 0.2C until the voltage reached 2.5 V. The results are shown in Table 1A.

### (3rd Cycle)

A constant-current charge was performed at a current value of 0.2C until the voltage reached 4.5 V, and a constant-voltage charge was performed at a voltage of 4.5 V until the current value reached 0.02C. Thereafter, a constant-current discharge was performed at a current value of 2C until the voltage reached 2.5 V. A further constant-current discharge was performed at a current value of 1C until the voltage reached 2.5 V. The results are shown in Table 1B. The discharge capacity in the 1C discharge means the discharge capacity measured over the entire discharge step.

**[Table 1A]**

| | Initial capacity (mAh/g) | | | | Charge-discharge efficiency (%) | |
|---|---|---|---|---|---|---|
| | 1st-cycle charge capacity | 1st-cycle discharge capacity | 2nd-cycle charge capacity | 2nd-cycle discharge capacity | 1st-cycle | 2nd-cycle |
| Charge/discharge conditions | 0.2C-0.02C | 0.1C | 0.2C-0.02C | 0.2C | - | - |
| Comparative Example 1 | 247.6 | 214.8 | 215.3 | 207.3 | 86.8 | 96.3 |
| Example 1 | 247.1 | 215.5 | 216.5 | 211.6 | 87.2 | 97.8 |
| Example 2 | 247.6 | 215.6 | 216.5 | 211.0 | 87.1 | 97.5 |
| Example 3 | 248.0 | 215.7 | 217.0 | 211.5 | 87.0 | 97.5 |

**[Table 1B]**

| | Output characteristics (mAh/g) | | | Output characteristics (%) | |
|---|---|---|---|---|---|
| | 3rd-cycle charge capacity | 3rd-cycle discharge capacity | 3rd-cycle discharge capacity | 2C/0.02C | 1C/0.02C |
| Charge/discharge conditions | 0.2C-0.02C | 2C | 1C | - | - |
| Comparative Example 1 | 206.4 | 166.3 | 181.8 | 80.2 | 87.7 |
| Example 1 | 212.1 | 189.5 | 198.9 | 89.5 | 94.0 |
| Example 2 | 211.5 | 189.5 | 198.9 | 89.8 | 94.3 |
| Example 3 | 211.7 | 176.7 | 194.0 | 83.5 | 91.7 |

In Table 1A, the charge-discharge efficiency (%) represents the ratio of the discharge capacity to the charge capacity. As shown in Table 1A, for each of the evaluation cells of Examples 1 to 3, the 1st-cycle and 2nd-cycle charge-discharge efficiencies were both higher than the 1st-cycle and 2nd-cycle charge-discharge efficiencies of the evaluation cell of Comparative Example 1.

As shown in Table 1B, for each of the evaluation cells of Examples 1 to 3, the 3rd-cycle charge capacity and discharge capacity were higher than the 3rd-cycle charge capacity and discharge capacity of the evaluation cell of Comparative Example 1.

In Table 1B, the item "2C/0.02C" represents the ratio of the discharge capacity at 2C to the charge capacity. The item "1C/0.02C" represents the ratio of the discharge capacity at 1C to the charge capacity. These values can be regarded as indices relating to the discharge capacity at a high current, that is, indices of the output characteristics of the evaluation cells. As shown in Table 1B, for each of the evaluation cells of Examples 1 to 3, the output characteristics at 2C and 1C were both higher than the output characteristics at 2C and 1C of the evaluation cell of Comparative Example 1. It is presumed that the use of the phosphorus-containing compound as an additive in the nonaqueous electrolyte solution changed the solvation environment to one suitable for high-current discharge.

From the above results, it is presumed that, even when a phosphorus-containing compound including magnesium is used, the same effect as those achieved with a phosphorus-containing compound including strontium and a phosphorus-containing compound including barium can be achieved.

### (Example 4)

### (Preparation of Nonaqueous Electrolyte Solution)

The nonaqueous electrolyte solution of Example 4 was obtained in the same manner as in Example 1, except that the concentration of LiPF₆ in the nonaqueous electrolyte solution was changed to 1.35 mol/L. The nonaqueous electrolyte solution of Example 4 exhibited fluidity at 25°C. In the nonaqueous electrolyte solution of Example 4, the Sr₃(PO₄)₂ particles were dispersed at 4 vol%.

### (Comparative Example 2)

EC, FEC, DMC, and EMC were mixed in a volume ratio of EC:FEC:DMC:EMC = 10:10:75:5 to prepare a nonaqueous solvent. In the nonaqueous solvent thus obtained, LiPF₆ was dissolved to a concentration of 1.35 mol/L, and thus the nonaqueous electrolyte solution of Comparative Example 2 was obtained. That is, the nonaqueous electrolyte solution of Comparative Example 2 was prepared in the same manner as in Example 4, except that the particles of the phosphorus-containing compound were not included.

### [Fabrication of Test Cells]

The evaluation cells of Example 4 and Comparative Example 2 were obtained in the same manner as in Example 1, except that the nonaqueous electrolyte solutions of Example 4 and Comparative Example 2 were used and that lithium nickel cobalt aluminum oxide (NCA) having the composition LiNi_{0.80}Co_{0.15}Al_{0.05}O₂ was used as the positive electrode active material.

### [Measurement of Charge Capacity and Discharge Capacity]

The charge capacity and discharge capacity of the evaluation cells of Example 4 and Comparative Example 2 were measured according to the procedure described above. The results are shown in Tables 2A and 2B.

**[Table 2A]**

| | Initial capacity (mAh/g) | | | | Charge-discharge efficiency (%) | |
|---|---|---|---|---|---|---|
| | 1st-cycle charge capacity | 1st-cycle discharge capacity | 2nd-cycle charge capacity | 2nd-cycle discharge capacity | 1st-cycle | 2nd-cycle |
| Charge/discharge conditions | 0.2C-0.02C | 0.1C | 0.2C-0.02C | 0.2C | - | - |
| Comparative Example 2 | 242.3 | 221.9 | 223.6 | 216.0 | 91.6 | 96.6 |
| Example 4 | 242.3 | 221.3 | 223.0 | 215.7 | 91.4 | 96.7 |

**[Table 2B]**

| | Output characteristics (mAh/g) | | | Output characteristics (%) | |
|---|---|---|---|---|---|
| | 3rd-cycle charge capacity | 3rd-cycle discharge capacity | 3rd-cycle discharge capacity | 2C/0.02C | 1C/0.02C |
| Charge/discharge conditions | 0.2C-0.02C | 2C | 1C | - | - |
| Comparative Example 2 | 219.1 | 195.0 | 200.3 | 90.3 | 92.7 |
| Example 4 | 219.2 | 195.4 | 200.9 | 90.6 | 93.1 |

As shown in Table 2A, for the evaluation cell of Example 4, the 1st-cycle and 2nd-cycle charge-discharge efficiencies were substantially equal to the 1st-cycle and 2nd-cycle charge-discharge efficiencies of the evaluation cell of Comparative Example 2. Meanwhile, as shown in Table 2B, for the evaluation cell of Example 4, the output characteristics at 2C and 1C were both higher than the output characteristics at 2C and 1C of the evaluation cell of Comparative Example 2. These results suggest that the technique of the present disclosure is particularly effective for enhancing the output characteristics of a battery, and that the effect of enhancing the output characteristics does not depend on the type of active material.

### INDUSTRIAL APPLICABILITY

The technique of the present disclosure is useful, for example, in lithium-ion secondary batteries.

## Claims

1. A nonaqueous electrolyte solution comprising:
a nonaqueous solvent;
an electrolyte dissolved in the nonaqueous solvent; and
a phosphorus-containing compound, wherein
the phosphorus-containing compound comprises at least one selected from the group consisting of magnesium, strontium, and barium.

2. The nonaqueous electrolyte solution according to claim 1, wherein
the phosphorus-containing compound comprises MₓP₂O_{y} (1 ≤ x ≤ 3, 5 ≤ y ≤ 10), and
M comprises at least one selected from the group consisting of magnesium, strontium, and barium.

3. The nonaqueous electrolyte solution according to claim 1, wherein
the phosphorus-containing compound comprises at least one selected from the group consisting of Sr₃(PO₄)₂, Ba₃(PO₄)₂, and Ba₂P₂O₇.

4. The nonaqueous electrolyte solution according to claim 1, wherein
a content of the phosphorus-containing compound in the nonaqueous electrolyte solution is 0.1 vol% or more and 50 vol% or less.

5. The nonaqueous electrolyte solution according to claim 1, wherein
the phosphorus-containing compound is insoluble in the nonaqueous solvent,
particles of the phosphorus-containing compound are included in the nonaqueous electrolyte solution, and
an average particle diameter of the particles is 1 nm or more and 500 nm or less.

6. The nonaqueous electrolyte solution according to claim 1, further comprising a fluorine-containing solvent.

7. The nonaqueous electrolyte solution according to claim 6, wherein
the fluorine-containing solvent comprises a fluorinated cyclic ester.

8. A nonaqueous electrolyte secondary battery comprising:
a positive electrode;
a negative electrode; and
the nonaqueous electrolyte solution according to claim 1.
